# EUROPÄISCHE PATENTANMELDUNG

(11) **EP 4 227 531 A1**
(43) Veröffentlichungstag der Anmeldung: **16.08.2023**
(21) Anmeldenummer: 22156044.4
(22) Anmeldetag: 10.02.2022
(51) Int. Cl.: F04B 39/10, F16K 15/10

(54) **VENTIL FÜR EINEN KOLBENKOMPRESSOR UND VERFAHREN ZUM BETRIEB EINES SOLCHEN**

(71) Anmelder: Burckhardt Compression AG, 8404 Winterthur (CH)
(72) Erfinder: SCHULZ, Reiner, 79807 Lottstetten (DE)
(74) Vertreter: Hepp Wenger Ryffel AG

(57) **Zusammenfassung**

Die vorliegende Erfindung betrifft ein Ventil (1) für einen Kolbenkompressor umfassend einen Ventilsitz (2) mit einer Vielzahl von Durchströmkanälen (12), die in eine Stirnseite (3) des Ventilsitzes (2) münden; eine Ventilplatte (4) aufweisend eine ebene Dichtfläche (5), die zum Steuern der Durchströmkanäle (12) des Ventilsitzes (2) ausgebildet ist und zu den Durchströmkanälen (12) des Ventilsitzes (2) räumlich versetzte Durchlassöffnungen (14) aufweist, wobei auf der Stirnseite (3) des Ventilsitzes (2) wenigstens ein Vorsprung (10) angeordnet ist, der zumindest in einem geschlossenen Ventilzustand in eine Durchlassöffnung (14) der Ventilplatte (4) hineinragt.

## Beschreibung

Die Erfindung bezieht sich auf das technische Gebiet von Hubkolben Kompressoren.

Als Ein- und Auslassventile von Hubkolben-Kompressoren mit grösseren Hubvolumina werden heutzutage meist Plattenventile mit einer Anzahl von konzentrisch angeordneten Durchströmöffnungen verwendet, die in der Regel mittels einer Ventilplatte aus Stahl oder Kunststoff abgedeckt werden. Bei einstückigen Ventilplatten werden zwangsweise alle Bereiche der Platte gemeinsam bewegt, was zu einer relativ gleichmässigen Belastung beim Öffnen und Schliessen führt. Allerdings haben solche Platten Nachteile hinsichtlich der Strömungslenkung und damit einhergehender Strömungsverluste.

Es wurde bereits vorgeschlagen, Plattenventile mit in Durchströmungsrichtung schräg stehenden Dichtflächen, sowohl an Ventilsitz als auch an Ventilplatte, auszubilden. Dies führt zu geringerer Strömungsumlenkung und damit geringeren Strömungsverlusten. Solche profilierte Ventilsitze und Ventilplatten wurden in AT514712A1 beschrieben. Die dort verwendeten Ventilplatten haben allerdings den Nachteil, dass bei unvermeidbaren, minimalen Dimensionsabweichungen bei der Herstellung und/oder unterschiedlichem Wärmedehnungsverhalten, sich bei Dichtringen mit schrägen Sitzflächen zwangsweise kleine Spalten bilden, die erst nach Anliegen des Schliessdrucks durch Deformation des Ringes schliessen. Die verbindenden radialen Stege zwischen den Dichtringen müssen daher besonders ausgebildet werden, um diesem unerwünschte Eindichtverhalten entgegenzuwirken. Die Herstellung der Dichtplatte wird aufwändig und kostenintensiv.

Es ist daher die Aufgabe der vorliegenden Erfindung, die Nachteile im Stand der Technik zu überwinden. Insbesondere ist es die Aufgabe der vorliegenden Erfindung, ein Ventil für einen Kolbenkompressor bereitzustellen, welches eine verbesserte Strömungslenkung gewährleistet, wobei die Ventilplatte dennoch einfach und kostengünstig hergestellt werden kann. Diese Aufgabe wird durch ein Ventil und ein Verfahren aufweisend die Merkmale der unabhängigen Ansprüche gelöst.

Die Aufgabe wird insbesondere gelöst durch ein Ventil für einen Kolbenkompressor, umfassend
- einen Ventilsitz mit einer Vielzahl von Durchströmkanälen, die in eine Stirnseite des Ventilsitzes münden;
- eine Ventilplatte aufweisend eine ebene Dichtfläche, die zum Steuern der Durchströmkanäle des Ventilsitzes ausgebildet ist;
wobei die Ventilplatte sich in einer zur Stirnseite des Ventilsitzes parallelen Ebene erstreckt, konzentrisch zum Ventilsitz angeordnet ist und zu den Durchströmkanälen des Ventilsitzes räumlich versetzte Durchlassöffnungen aufweist, dadurch gekennzeichnet dass auf der Stirnseite des Ventilsitzes wenigstens ein Vorsprung angeordnet ist, der zumindest in einem geschlossenen Ventilzustand in eine Durchlassöffnung der Ventilplatte hineinragt.

Im Sinne der Erfindung bedeutet eine "ebene" Ausbildung der Dichtfläche, dass die Ventilplatte keine profilierte Dichtfläche aufweist, insbesondere keine zum Ventilsitz hin abgeschrägte Kante einer Durchlassöffnung aufweist. Typischerweise weist die Ventilplatte überhaupt keine Vorsprünge und Einbuchtung auf. Besonders bevorzugt wird die Ventilplatte aus einem ebenen Substrat, beispielsweise einem Edelstahlblech, geformt, insbesondere gestanzt, gefräst oder geschnitten. Typischerweise bildet sich dadurch zwischen der Dichtfläche und den Wänden der Durchlassöffnungen ein Winkel von im Wesentlichen 90° aus.

Das erfindungsgemässe Ventil weist den Vorteil auf, dass die Strömungsumlenkung optimiert und Strömungsverluste verringert werden, wodurch sich die Ventileffizienz verbessert. Dennoch kann die ebene Ventilplatte kostengünstig und effizient hergestellt werden. Die ebene Dichtfläche der bevorzugt einstückig ausgeführten Ventilplatte gewährleistet eine gleichmässige Belastung beim Öffnen und Schliessen über die verschiedenen Bereiche der Dichtfläche hinweg. Durch die gleichmässige Beschaffenheit der Oberfläche kann die Leackagerate tief gehalten werden.

In einer bevorzugten Ausführungsform umfasst das Ventil wie vorstehend beschrieben zusätzlich einen Fänger, der so angeordnet ist, dass sich die Ventilplatte zwischen dem Ventilsitz und dem Fänger erstreckt. Der Fänger kann Vertiefungen, z.B. Sackbohrungen, aufweisen um Federn aufzunehmen. Das Ventil wie vorstehend beschrieben kann Federn umfassen, die am Fänger angeordnet sind, um die Ventilplatte gegen die Stirnseite des Ventilsitzes zu belasten, damit das Ventil im drucklosen Zustand geschlossen ist.

Es ist bevorzugt, wenn die Ventilplatte und der Ventilsitz jeweils die Form einer Ringplatte aufweisen. Besonders bevorzugt ist es, wenn die Durchströmkanäle und die Durchlassöffnungen in der Draufsicht jeweils als Schlitze in Form von konzentrischen Kreisbogenen ausgebildet sind.

Plattenventile dieser Bauart sind in verschiedenen Ausführungen bekannt. Beim Arbeiten solcher Ventile führt die Ventilplatte eine Hubbewegung zwischen dem Ventilsitz und dem Fänger aus, wobei sie die Durchströmkanäle des Ventilsitzes abwechsend verschliesst (geschlossener Ventilzustand) und freigibt (offener Ventilzustand). Solche Plattenventile neigen aber aufgrund der beträchtlichen Strömungsumlenkung zwischen den Durchströmkanälen und den Durchlassöffnungen zu Strömungsverlusten. Durch die hier präsentierte Lösung werden die Vorteile des Plattenventils wie gleichmässige Belastung, langer Lebenszyklus, hohe Leakage-Resistenz mit verbesserter Strömungsumlenkung kombiniert.

In einer bevorzugten Ausführungsform liegt die ebene Dichtfläche der Ventilplatte in einem geschlossenen Ventilzustand bereichsweise auf der Stirnseite des Ventilsitzes auf, wobei die Auflagebereiche sich senkrecht zu den Durchströmkanälen des Ventilsitzes erstrecken. Diese Ausführungsform sorgt für gute Dichtleistung ohne Eindichtverzögerung beim Ventilschluss. Sie unterscheidet sich damit von bekannten Ventilplatten, bei denen abgeschrägte Dichtflächen mit entsprechenden, gegengleichen Sitzflächen am Ventilsitze zusammenwirken, um die Strömung zu optimieren.

Besonders bevorzugt ist ein Ventil wie vorstehend beschrieben, zusätzlich umfassend eine sich zwischen der Ventilplatte und dem Fänger in zur Stirnseite des Ventilsitzes paralleler Ebene erstreckende Hilfsplatte, bevorzugt eine Dämpferplatte, wobei vorzugsweise die Federn durch Löcher in der Hilfsplatte hindurchragen, um die Ventilplatte gegen die Stirnseite des Ventilsitzes zu drücken. Die Hilfsplatte kann die Aufgabe haben, die Aufschläge der Ventilplatte auf dem Fänger zu dämpfen und/oder sie erforderlichenfalls während der Hubbewegung zu führen. Ersteres ist v.a. notwendig, wenn es sich bei der Ventilplatte um eine Platte aus Stahl oder Nickelbasislegierung (Hastelloy) handelt. Alternativ kann statt einer Ventilplatte und einer Hilfsplatte auch eine einzelne, nicht-metallische Ventilplatte eingesetzt werden. Eine solche ist typischerweise aus thermoplastischem Hochleistungspolymer wie beispielsweise faserverstärktem PEEK und/oder Polyimid. Solche Platten haben eine höhere Zähigkeit, Schlagfestigkeit und Widerstandsfähigkeit gegenüber Beschädigungen durch Flüssigkeiten oder Verunreinigungen.

In einer bevorzugten Ausführungsform ist auf der Stirnseite des Ventilsitzes eine Vielzahl von Vorsprüngen angeordnet, die zumindest im geschlossenen Ventilzustand in je eine entsprechende Durchlassöffnung der Ventilplatte hineinragen. Der effizienzsteigernde Effekt der Strömungsumlenkung lässt sich optimieren, indem je Durchlassöffnung wenigstens ein Vorsprung eingesetzt wird. Besonders bevorzugt ist es, wenn im Ventil wie vorstehend beschreiben die Durchlassöffnungen der Ventilplatte als kreisbogenförmige Schlitze ausgebildete sind und die Vorsprünge auf der Stirnseite des Ventilsitzes als entsprechende kreisbogenförmige Vorsprünge ausgebildet sind. Somit ragt im geschlossenen Ventilzustand in jede Durchlassöffnung der Ventilplatte ein Längsvorsprung, der im Wesentlichen der Form der Durchlassöffnung folgt.

In einer Ausführungsform weist der wenigstens eine Vorsprung einen Querschnitt auf, der sich zur Ventilplatte hin verjüngt, bevorzugt konisch zuläuft, besonders bevorzugt über konkave Seitenwölbung zuläuft. Wenn es sich um kreisbogenförmige Vorsprünge handelt ist ein radialer Querschnitt gemeint. Unter "konkaver Seitenwölbung" wird verstanden, dass die zulaufenden Seiten im Querschnitt einen Krümmungsradius aufweisen oder eine variable, insbesondere zur Ventilplatte hin zunehmende, Steigung aufweisen.

In einer Ausführungsform ist der wenigstens eine Vorsprung mit dem Ventilsitz einstückig ausgebildet. Der wenigstens eine Vorsprung kann beispielsweise aus dem Ventilsitz gefräst oder gedreht werden. Diese Ausführungsform hat den Vorteil, dass die Vorsprünge besonders langlebig und inert sind.

Alternativ kann der wenigstens eine Vorsprung aus Kunststoff, bevorzugt aus PTFE, hergestellt sein. In diesem Fall ist der Vorsprung mit dem metallischen Ventilsitz verbunden, beispielsweise form- oder kraftschlüssig in eine entsprechende Ausnehmung im Ventilsitz eingefügt. In einer bevorzugten Ausführungsform ist der Vorsprung ein ringförmiges oder kreisbogenförmige Stück, welches in eine entsprechende Nut auf der Stirnseite des Ventilsitzes eingepasst ist. Wenn separate Teile verwendet werden, wird die Materialwahl flexibler und dank der Austauschbarkeit wird die Wartung vereinfacht, beispielsweise das Überdrehen oder das maschinelle Bearbeiten.

Ein Aspekt der Erfindung bezieht sich auf ein Verfahren zum Betrieb eines Ventils für einen Kolbenkompressor, wobei das Ventil einen Ventilsitz und eine Ventilplatte umfasst, wobei der Ventilsitz eine Vielzahl von Durchströmkanälen aufweist, die in eine Stirnseite des Ventilsitzes münden, und die Ventilplatte eine ebene Dichtfläche aufweist, die sich in einer zur Stirnseite des Ventilsitzes parallelen Ebene erstreckt, konzentrisch zum Ventilsitz angeordnet ist und zu den Durchströmkanälen des Ventilsitzes räumlich versetzte Durchlassöffnungen aufweist, wobei die Ventilplatte in einem geschlossenen Ventilzustand die Durchströmkanäle blockiert und sie in einem offenen Ventilzustand freigibt, und wobei die Ventilplatte den offenen Zustand einnimmt, wenn sie aufgrund eines am Ventil anliegenden Fluiddrucks selbsttätig vom Ventilsitz abhebt, sodass Fluid durch die Durchströmkanäle des Ventilsitzes und stromabwärts durch die Durchlassöffnungen der Ventilplatte strömt, dadurch gekennzeichnet dass Fluid über einen Vorsprung angeordnet an der Ventilplatte des Ventilsitzes in eine Durchlassöffnung der Ventilplatte gelenkt wird.

Dieses Verfahren löst ebenfalls die vorstehend beschriebene Aufgabe. Durch das Verfahren wird die Strömungsumlenkung optimiert und es werden Strömungsverluste verringert, wodurch sich die Ventileffizienz verbessert. Dennoch kann die ebene Ventilplatte kostengünstig und effizient hergestellt werden. Die ebene Dichtfläche der Ventilplatte gewährleistet eine gleichmässige Belastung beim Öffnen und Schliessen über die verschiedenen Bereiche der Dichtfläche hinweg. Durch die gleichmässige Beschaffenheit der Oberfläche werden Passungenauigkeiten vermieden und es kann die Leackagerate tief gehalten werden.

Es ist bevorzugt, wenn im vorstehend beschriebenen Verfahren das Fluid über eine Vielzahl von Vorsprüngen angeordnet an der Stirnseite des Ventilsitzes in je eine entsprechende Durchlassöffnung der Ventilplatte gelenkt wird. Es kann das Fluid über wenigstens einen, sich zur Ventilplatte hin verjüngenden Vorsprung, bevorzugt einen im Querschnitt konisch zulaufenden Vorsprung, besonders bevorzugt konkave Seitenwölbungen aufweisenden Vorsprung, in wenigstens eine Durchlassöffnung der Ventilplatte gelenkt werden.

Ein Aspekt der Erfindung bezieht sich auf einen Kolbenkompressor aufweisend ein Ventil wie vorstehend beschrieben.

Die Erfindung wird durch die Figuren und nachstehende Erläuterungen weiter verständlich gemacht. Die Figuren zeigen bevorzugte Ausführungsformen und schränken den Gegenstand der Erfindung nicht ein.

Es zeigen:
- Figur 1A: Querschnitt durch ein bekanntes Plattenventil (Stand der Technik);
- Figur 1B: Perspektivische Explosionsansicht eines bekannten Plattenventils (Stand der Technik);
- Figur 1C: Querschnitt durch ein bekanntes Plattenventil (Stand der Technik), Detail;
- Figur 2: Querschnitt durch ein Plattenventil gemäss einer Ausführungsform der Erfindung;
- Figur 3: Querschnitt durch ein Plattenventil gemäss einer Ausführungsform der Erfindung, Detail;
- Figur 4: Querschnitt durch ein Plattenventil gemäss einer Ausführungsform der Erfindung;
- Figur 5: Querschnitt durch ein Plattenventil gemäss einer Ausführungsform der Erfindung, Detail;

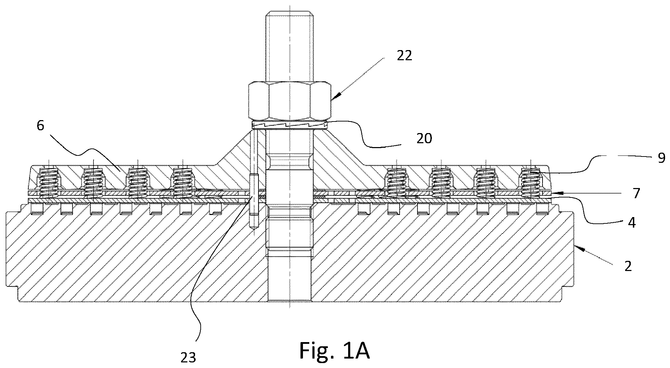

Die Figuren 1A bis 1C zeigen ein Ventil für einen Kolbenkompressoren, wie es im Stand der Technik bekannt ist. Das Ventil 1 weist einen Ventilsitz 2 mit einer Vielzahl von Durchstömkanälen 12 auf, die in eine Stirnseite 3 des Ventilsitzes 2 münden. Das Ventil weist weiter eine Ventilplatte 4 auf, die eine ebene Dichtfläche 5 hat, die zum Steuern der Durchströmkanäle 12 des Ventilsitzes 2 ausgebildet ist. Die Ventilplatte 4 erstreckt sich in einer zur Stirnseite des Ventilsitzes parallelen Ebene.

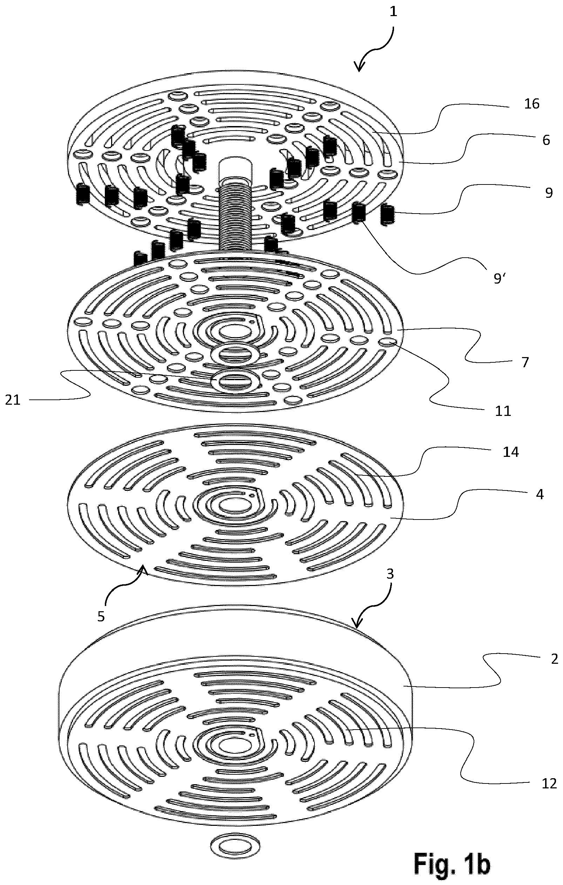

Der Ventilsitz 2 und die Ventilplatte 4 weisen die Form von Ringplatten auf und sind konzentrisch angeordnet. In Figur 1B ist ersichtlich, dass die Durchströmkanäle 12 des Ventilsitzes 2 und die Durchlassöffnungen 14 der Ventilplatte 4 zueinander räumlich versetzt angeordnet sind. Konkret wäre in der Draufsicht (nicht gezeigt) erkennbar, dass es sich um Schlitze in Form von Kreisbogen, konzentrisch zur Mittelachse handelt. Die Kreisbogen verlaufen nicht über den ganzen Kreisumfang.

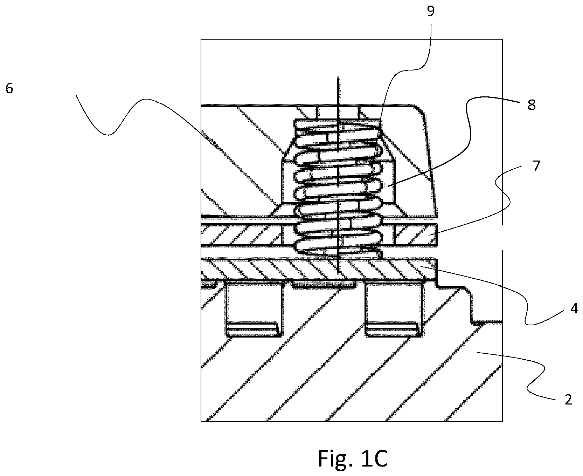

Weiter ist in Figur 1B ein Fänger 6 gezeigt, der so angeordnet ist, dass sich die Ventilplatte 4 zwischen dem Ventilsitz 2 und dem Fänger 6 erstreckt. Der Fänger 6 weist ein Schlitzmuster aus Durchlasskanälen 16 auf, welches demjenigen der Durchlassöffnungen 14 der Ventilplatte 4 entspricht. Das Ventil umfasst eine Vielzahl von Federn 9,9', die am Fänger 6 angeordnet sind, um die Ventilplatte 4 gegen die Stirnseite 3 des Ventilsitzes 2 zu bewegen. Konkret sind die Federn 9,9' in Vertiefungen 8 des Fängers 6 angeordnet, was in Figur 1C sichtbar ist. Schliesslich ist in der Figur 1B auch eine sich zwischen der Ventilplatte 4 und dem Fänger 6 in zur Stirnseite 3 des Ventilsitzes 2 paralleler Ebene erstreckende Dämpferplatte 7 gezeigt, wobei die Federn 9,9' durch Löcher 11 in der Dämpferplatte 7 hindurchragen, um die Ventilplatte 4 gegen die Stirnseite 3 des Ventilsitzes 2 zu belasten.

Die Zentralachse, hinsichtlich welcher die Ringplatten konzentrisch angeordnet sind, wird durch eine Zentralschraube 22 gebildet. Die Zentralschraube 22 ragt als Fängernabe gegen den Ventilsitz 2. Das Ventil wird durch Keilsicherungsscheiben 20 stabilisiert und die Ventil- und Dämpferplatte können gegenseitig durch Hubscheiben 21 beabstandet werden. Ein Stift 23 kann verwendet werden, um ein unbeabsichtigtes Verdrehen der verschiedenen Ringplatten zu verhindern.

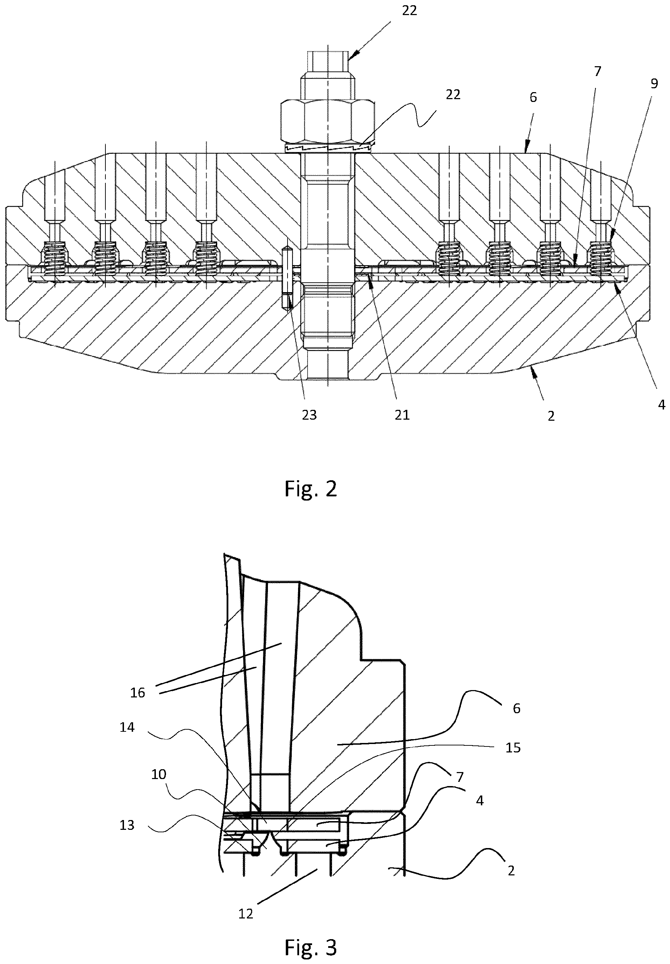

Figur 2 zweigt einen Axialschnitt durch ein erfindungsgemässes Ventil im Bereich einer Reihe von Schraubenfedern 9, 9'. Die Schraubenfedern 9, 9' sind mit ihren oberen Enden in je einer Sackbohrung des Fängers 6 befestigt. Das andere, untere Ende der Schraubenfeder 9, 9' drückt die Ventilplatte 4 gegen einen allfälligen Gasdruck respektive Unterdruck Richtung Ventilsitz 2. Eine Dämpferplatte 7 mit einem Löchern 11, durch welche Federn 9,9' hindurchragen, ist ebenfalls gezeigt.

Figur 3 zeigt einen radialen Schnitt durch ein erfindungsgemässes Ventil 1, nunmehr im Bereich eines Durchströmkanals 12 des Ventilsitzes 2 und dazu radial versetzter Durchlassöffnung 14 in der Ventilplatte 4, respektive Durchlasskanal 16 des Fängers 6. Auch die Dämpferplatte 7 weist das Schlitzmuster von Ventilplatte 4 und Fänger 6 auf. Es ist ersichtlich, dass auf der Stirnseite 3 des Ventilsitzes ein Vorsprung 10 angeordnet ist. Das Ventil ist einem geschlossenen Zustand gezeigt. Die ebene Dichtfläche 5 der Ventilplatte 4 liegt bereichsweise auf der Stirnseite 3 des Ventilsitzes 2 auf, und zwar so dass die Auflagebereiche 13 sich senkrecht zu den Durchströmkanälen 12 des Ventilsitzes 2 erstrecken.

In der gezeigten Ausführungsform ragt der Vorsprung 10 im geschlossenen Ventilzustand durch die Ventilplatte 4, nicht aber die Dämpferplatte 7 hindurch. Es sind aber auch andere Ausführungsformen denkbar. Nicht ersichtlich ist, dass die Durchlassöffnungen 14 der Ventilplatte 4 als kreisbogenförmige Schlitze ausgebildete sind und die Vorsprünge 10 auf der Stirnseite 3 des Ventilsitzes 2 als entsprechende kreisbogenförmige Vorsprünge ausgebildet sind. Diese Variante ist für ein ringförmiges Ventil, wie es in Figur 1B gezeigt ist, bevorzugt.

Aus Figur 3 wird sodann ersichtlich, dass der Vorsprung 10 im radialen Querschnitt sich zur Ventilplatte 4 hin verjüngt und konkret über konkave Seitenwölbungen 15 zuläuft, d.h. die Steigung jeder zulaufenden Seite wird zur Ventilplatte 4 hin steiler. Der Vorsprung 10 ist mit dem Ventilsitz 2 einstückig ausgebildet.

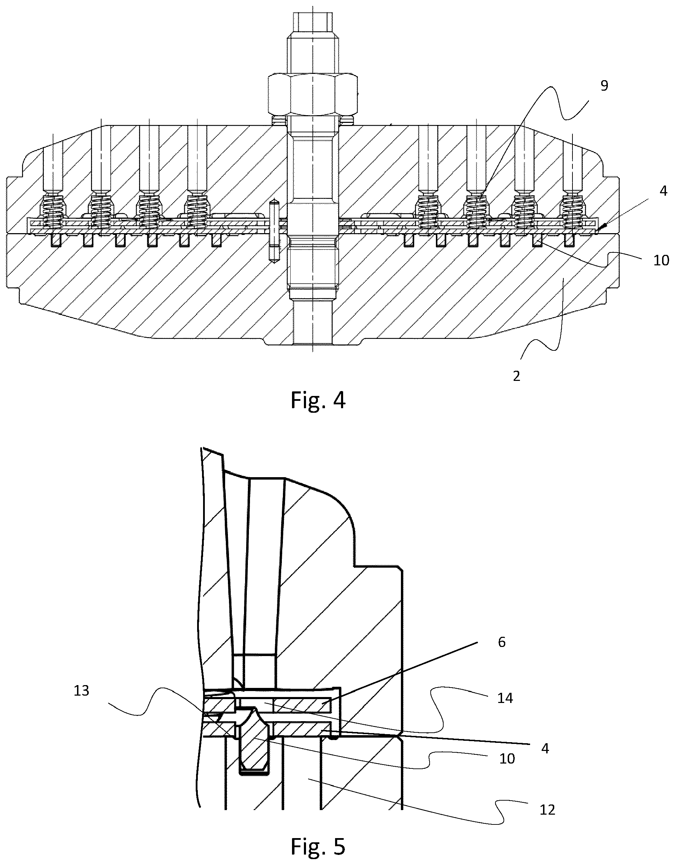

Figur 4 zeigt einen Axialschnitt durch ein erfindungsgemässes Ventil im Bereich einer Reihe von Schraubenfedern 9. In dieser Ausführungsform sind die Vorsprünge 10 als in den Ventilsitz 2 einsetzbare und aus dem Ventilsitz 2 entfernbare Teile ausgebildet. Es handelt sich um ringförmige, separate Teile, die in entsprechende Nuten des Ventilsitzes 2 kraftschlüssig und austauschbar eingepasst sind.

In der Detailansicht von Figur 5 ist ersichtlich, dass die Vorsprünge 10 im radialen Schnitt ebenfalls über konkave Seitenwölbungen zulaufen, zumindest im Bereich einer Durchlassöffnung 14 der Ventilplatte 4.

## Patentansprüche

1. Ventil (1) für einen Kolbenkompressor umfassend
- einen Ventilsitz (2) mit einer Vielzahl von Durchströmkanälen (12), die in eine Stirnseite (3) des Ventilsitzes (2) münden;
- eine Ventilplatte (4) aufweisend eine ebene Dichtfläche (5), die zum Steuern der Durchströmkanäle (12) des Ventilsitzes (2) ausgebildet ist;
wobei die Ventilplatte (4) sich in einer zur Stirnseite (3) des Ventilsitzes (2) parallelen Ebene erstreckt, konzentrisch zum Ventilsitz (2) angeordnet ist und zu den Durchströmkanälen (12) des Ventilsitzes (2) räumlich versetzte Durchlassöffnungen (14) aufweist,
**dadurch gekennzeichnet dass**
auf der Stirnseite (3) des Ventilsitzes (2) wenigstens ein Vorsprung (10) angeordnet ist, der zumindest in einem geschlossenen Ventilzustand in eine Durchlassöffnung (14) der Ventilplatte (4) hineinragt.

2. Ventil nach Anspruch 1, zusätzlich umfassend einen Fänger (6), der so angeordnet ist, dass sich die Ventilplatte (4) zwischen dem Ventilsitz (2) und dem Fänger (6) erstreckt, wobei bevorzugt Federn (9,9') am Fänger (6) angeordnet sind, um die Ventilplatte (4) gegen die Stirnseite (3) des Ventilsitzes (2) zu belasten.

3. Ventil nach einem der vorhergehenden Ansprüche, wobei die ebene Dichtfläche (5) der Ventilplatte (4) in einem geschlossenen Ventilzustand bereichsweise auf der Stirnseite (3) des Ventilsitzes (2) aufliegt, wobei die Auflagebereiche (13) sich senkrecht zu den Durchströmkanälen (12) des Ventilsitzes erstrecken.

4. Ventil (1) nach Anspruch 2 oder 3, zusätzlich umfassend
- eine sich zwischen der Ventilplatte (4) und dem Fänger (6) in zur Stirnseite (3) des Ventilsitzes (2) paralleler Ebene erstreckende Hilfsplatte (7), bevorzugt eine Dämpferplatte,
wobei vorzugsweise die Federn (9, 9') durch Löcher (11) in der Hilfsplatte (7) hindurchragen, um die Ventilplatte (4) gegen die Stirnseite (3) des Ventilsitzes (2) zu belasten.

5. Ventil (1) nach einem der vorhergehenden Ansprüche, wobei auf der Stirnseite (3) des Ventilsitzes (2) eine Vielzahl von Vorsprüngen (10) angeordnet sind, die zumindest im geschlossenen Ventilzustand in je eine entsprechende Durchlassöffnung (14) der Ventilplatte (4) hineinragen.

6. Ventil nach Anspruch 4, wobei die Durchlassöffnungen (14) der Ventilplatte (4) als kreisbogenförmige Schlitze ausgebildete sind und die Vorsprünge (10) auf der Stirnseite (3) des Ventilsitzes (2) als entsprechende kreisbogenförmige Vorsprünge ausgebildet sind.

7. Ventil (1) nach einem der vorhergehenden Ansprüche, wobei der wenigstens eine Vorsprung (10) einen Querschnitt aufweist, der sich zur Ventilplatte (4) hin verjüngt, bevorzugt konisch zuläuft, besonders bevorzugt über konkave Seitenwölbungen (15) zuläuft.

8. Ventil (1) nach einem der vorhergehenden Ansprüche, wobei der wenigstens eine Vorsprung (10) mit dem Ventilsitz (2) einstückig ausgebildet ist.

9. Ventil nach Anspruch 7, wobei der wenigstens eine Vorsprung (10) aus dem Ventilsitz (2) gefräst oder gedreht wird.

10. Ventil nach einem der Ansprüche 1 bis 6, wobei der wenigstens eine Vorsprung (10) als in den Ventilsitz (2) einsetzbares und aus dem Ventilsitz (2) entfernbares Teil ausgebildet ist.

11. Ventil nach Anspruch 9, wobei der wenigstens eine Vorsprung (10) aus Kunststoff, bevorzugt aus PTFE, hergestellt ist.

12. Verfahren zum Betrieb eines Ventils für einen Kolbenkompressor, wobei das Ventil einen Ventilsitz (2) und eine Ventilplatte (4) umfasst,
wobei der Ventilsitz (2) eine Vielzahl von Durchströmkanälen (12) und eine Stirnseite (3) aufweist, in welche die Durchströmkanäle (12) münden, und die Ventilplatte (4) zu den Durchströmkanälen (12) des Ventilsitzes (2) räumlich versetzte Durchlassöffnungen (14) aufweist,
wobei die Ventilplatte (4) in einem geschlossenen Ventilzustand die Durchströmkanäle (12) blockiert und sie in einem offenen Ventilzustand freigibt, und wobei die Ventilplatte (4) den offenen Zustand einnimmt, wenn sie aufgrund eines am Ventil anliegenden Fluiddrucks selbsttätig vom Ventilsitz (2) abhebt, sodass Fluid durch die Durchströmkanäle (12) des Ventilsitzes (2) und stromabwärts durch die Durchlassöffnungen (14) der Ventilplatte (4) strömt,
**dadurch gekennzeichnet dass**
Fluid über einen Vorsprung (10), angeordnet an der Ventilplatte (3) des Ventilsitzes (2), in eine Durchlassöffnung (14) der Ventilplatte (4) gelenkt wird.

13. Verfahren nach Anspruch 12, wobei das Fluid über eine Vielzahl von Vorsprüngen (10) angeordnet an der Stirnseite (3) des Ventilsitzes (2) in je eine entsprechende Durchlassöffnung (14) der Ventilplatte (4) gelenkt wird.

14. Verfahren nach einem der Ansprüche 11 bis 12, wobei das Fluid über wenigstens einen sich zur Ventilplatte (4) hin verjüngenden Vorsprung (10), bevorzugt einen im Querschnitt konisch zulaufenden Vorsprung (10), besonders bevorzugt konkave Seitenwölbungen (15) aufweisenden Vorsprung (10), in wenigstens eine Durchlassöffnung (14) der Ventilplatte (4) gelenkt wird.

15. Kolbenkompressor aufweisend ein Ventil nach einem der Ansprüche 1 bis 10.
